# EUROPEAN PATENT SPECIFICATION

(11) **EP 3 591 803 B1**
(45) Date of publication and mention of the grant of the patent: **16.09.2020**
(21) Application number: 18911320.2
(22) Date of filing: 01.06.2018
(51) Int. Cl.: H02J 13/00, B61L 99/00, H04L 29/08

(54) **MASTER/STANDBY MACHINE DATA SYNCHRONIZATION METHOD FOR RAILWAY CENTRALIZED TRAFFIC CONTROL SYSTEM**
VERFAHREN ZUR DATENSYNCHRONISATION FÜR HOT-STANDBY-MASCHINEN IM SCHIENENZENTRALISIERTEN VERKEHRSSTEUERUNGSSYSTEM
PROCÉDÉ DE SYNCHRONISATION DE DONNÉES DE MACHINES MAÎTRESSE/DE SECOURS POUR SYSTÈME DE COMMANDE CENTRALISÉE DE LA CIRCULATION FERROVIAIRE

(30) Priority: 20.04.2018 CN 201810360345
(43) Date of publication of application: 08.01.2020
(73) Proprietor: CRSC RESEARCH & DESIGN INSTITUTE GROUP CO., LTD., Fengtai District Beijing 100070 (CN)
(72) Inventor: WEI, Feng, Beijing 100070 (CN); LIN, Feng, Beijing 100070 (CN); WANG, Lijun, Beijing 100070 (CN); CHEN, Jianxin, Beijing 100070 (CN); LIU, Kenan, Beijing 100070 (CN); ZHAO, Guimin, Beijing 100070 (CN); LIU, Jun, Beijing 100070 (CN); WANG, Meihong, Beijing 100070 (CN)
(74) Representative: Huang, Liwei
(86) International application number: PCT/CN2018/089469
(87) International publication number: WO 2019/200671

(56) References cited:
- WO-A1-2008/116429
- CN-A- 101 262 147
- CN-A- 101 692 675
- CN-A- 103 684 839
- CN-A- 103 888 283
- CN-A- 107 800 521
- US-A1- 2010 054 184
- US-A1- 2014 324 774
- CHANDRA V ET AL: "A fail-safe interlocking system for railways", IEEE DESIGN & TEST OF COMPUTERS, IEEE SERVICE CENTER, NEW YORK, NY, US, vol. 8, no. 1, 1 March 1991 (1991-03-01), pages 58-66, XP011418469, ISSN: 0740-7475, DOI: 10.1109/54.75664

## Description

This application claims priority to Chinese Patent Application No. 201810360345.6, filed with Chinese Patent Office on April 20, 2018 and entitled by "Data Synchronization Method For A Host Machine And A Standby Machine In the Centralized Traffic Control (CTC) System"

### TECHNICAL FIELD

The present disclosure relates to a data synchronization method for a host machine and a standby machine in the railway Centralized Traffic Control (CTC) system.

### BACKGROUND

The Centralized Traffic Control (CTC) system is an important technical system for railway modernization. In order to improve the reliability and safety of the system, the key apparatus of the CTC system, such as servers and the autonomous machines, adopts duplicated redundancy design. For important services, two machines are used for data backup and jointly perform the same service. Under normal circumstances, the two machines run in host-standby mode. When the host machine fails, the standby machine is upgraded as the host machine to continuously undertake service tasks, so that the system can automatically provide tasks without manual intervention. Therefore, the dual-machine data has to be synchronized to ensure the implementation of the redundancy switching function.

The existing host and standby dual-machine data synchronization technologies perform data synchronization through the same communication channel, and all data has to be synchronized. Only the host machine performs logical operations to complete the information interaction with other machines at each instant time, while the standby machine keeps synchronization with the host machine through the same only communication channel. In this situation, the requirements of synchronization functions of different data have been ignored. And also, the reliability of using the only communication channel is low, for that when the only channel fails, all synchronization will be affected.

WO 2008/116429A1 discloses an electronic railway interlocking equipment system, wherein each commanding computer system is connected to a vital computer of the respective branch for creating the vital core of the control level, and the control level can contain further stand-by vital computers for the respective branches, while the executive level is made up of at least one commanding device.

CHANDRA V ET AL: "A fail-safe interlocking system for railways", IEEE DESIGN & TEST OF COMPUTERS, IEEE SERVICE CENTER, NEW YORK, NY, US, vol. 8, no. 1, 1 March 1991 (1991-03-01), pages 58-66, discloses a FIRM (short for fail-safe interlocking system for railways using microprocessors) architecture using a pair of processors that operate in duplex mode, with one or more pairs kept as standby.

### SUMMARY

In view of the above defects in the prior art and the demands of synchronization for different data, the present disclosure proposes a method and system for synchronizing data of a host machine and a standby machine of centralized traffic control system.

The present invention provides a data synchronization method as described in claim 1 as well as advantageous embodiments as described in claims 2 to 4.

The present invention further provides a data synchronization system as described in claim 5.

The present disclosure is realized by the following technical schemes:
a data synchronization method for a host machine and a standby machine in the railway centralized traffic control (CTC) method, comprising steps of: dividing program modules of the host machine and the standby machine into synchronization data program modules and non-synchronization data program modules; for each of the synchronization data program modules that require data synchronization, establishing communication connection channels, performing, by the synchronization data program modules of the host machine, logical operations with the data received and synchronization operation which passes the result of logical operation to the corresponding synchronization data program modules of the standby machine through the said communication connection channels; for the non-synchronization data program modules that do not require data synchronization, performing separately, by the non-synchronization data program modules of the host machine and the standby machine, operations with the data respectively received.

Further, the dividing program modules of the host machine and the standby machine is based on whether the program modules of the host machine and the program modules of the standby machine are able to read and operate the same data, wherein if the program modules of the host machine and the program modules of the standby machine are able to read and operate the same data, no synchronization is required, otherwise the synchronization is required.

Further, the synchronization data program modules includes a train number tracking module, an information caching module, and a route processing module; the non-synchronization data program modules include a station signaling equipment status information module.

Further, the train number tracking module is used to receive train number operation information, adjacent station train number information, train number verification information and station signaling equipment status information; the information caching module is used to receive train number information and station signaling equipment status information; the station signaling equipment status information module is used to receive interlocking status information, Train Control status information, and sampling status information; the route processing module is used to receive route operation information, route planning information, train number information and station signaling equipment status information.

Further, the communication connection channels are connected by TCP/IP network.

Further, the communication connection channels are established respectively for each of the synchronization data program modules.

A data synchronization system for a host machine and a standby machine in the railway centralized traffic control (CTC) system, comprising a host machine, a standby machine and communication connection channels;

The host machine includes a plurality of synchronization data program modules and a plurality of non-synchronization data program modules;

The standby machine includes, correspondingly to the program modules of the host machine, a plurality of synchronization data program modules and a plurality of non-synchronization data program modules;
wherein the synchronization data program modules of the host machine are connected with the synchronization data program modules of the standby machine through the communication connection channels; the synchronization data program modules of the host machine perform logical operations with the data they have read, and synchronize to the synchronization data program modules of the corresponding standby machine with the operation result through the communication connection channels; the non-synchronization data program modules of the host machine and the standby machine perform operations with the data they have read respectively.

The beneficial technical effects brought by the present disclosure are as follows: It has taken the synchronization function requirements of different data in consideration; Using different channels for data synchronization for the program modules that require data synchronization, so that each program module has its own synchronization channel, which reduces the volume of data synchronization, thus mutual interference has been avoided and the reliability and security of the system has been improved.

### BRIEF DESCRIPTION OF DRAWINGS

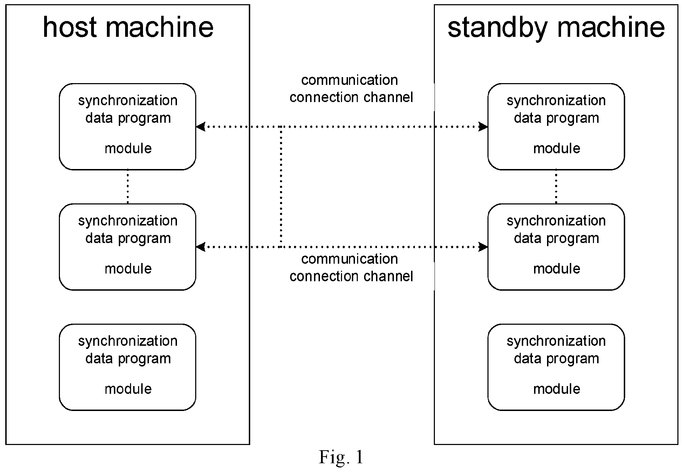

Fig. 1 is a structural view of a data synchronization system for a host machine and a standby machine in centralized traffic control (CTC) system.

### DESCRIPTION OF EMBODIMENTS

The present disclosure relates to a data synchronization method and system for a host machine and a standby machine in centralized traffic control (CTC) system. The embodiments of the present disclosure are described in detail below.

There are the same program modules running on the host machine and the standby machine of the CTC system, where each of the program modules perform different system functions, including a train tracking module, an information caching module, a station signaling equipment status information module, and a route processing module, etc. The train tracking module is used to track and check the train number; the station signaling equipment status information module is used to receive and process the status information of the station signal devices in real time; the information caching module is used to cache the status information of the station signal device and the information of train number; the route processing module is used to process the route manual operation and the route automatic triggering.

There are different synchronization strategies for data, wherein some modules require data synchronization, and other modules do not require data synchronization. Therefore, a plurality of program modules in the host machine and the standby machine are divided into two sorts: program modules that require data synchronization and program modules that do not require data synchronization, i.e. a plurality of synchronization data program modules and a plurality of non-synchronization data program modules.

For example, for the information caching modules of a host machine and a standby machine:
1) when the information caching module of the host machine starts, it requests all the train number information from the train number tracking module, and caches it into memory after receiving all the train number information while synchronizing it to the standby machine; and it requests all the station signaling equipment status information from the station signaling equipment status information module, and caches it into the memory after receiving all the station signaling equipment status information while synchronizing it to the standby machine.
2)during operation, receiving the changed train number information and all of the train number information sent by the train number tracking module, comparing them with the locally cached train number information; if there are changes, updating the local cache and synchronizing them to the standby machine.
3) during operation, receiving the changed station signaling equipment status information and all of the station signaling equipment status information sent by the station signaling equipment status information module, comparing them with the locally cached station signaling equipment status information; if there are changes, updating the local cache and synchronizing them to the standby machine.
4) the standby machine directly updates the local cache information when it receives the synchronized information,

Further, communication connection channels are established respectively for each of program modules which require data synchronization; the program modules of the host machine perform logical tracking operation with the data received, and synchronize the operation result to the corresponding program modules of the standby machine through the communication connection channels; the program modules of the host machine and the standby machine respectively perform operation with the data read by each of the program modules that do not require data synchronization.

Further, the principles of dividing a plurality of program modules in the host machine and the standby machine is: dividing them based on whether the program modules of the host machine and the program modules of the standby machine may read and operate the same data, wherein if the program modules of the host machine and the program module of the standby machine may read and operate the same data, no synchronization is required, thus, the modules are non-synchronization data program modules; otherwise the synchronization is required, and the modules are synchronization data program modules.

Further, the synchronous data program modules include a train number tracking module, an information caching module, and a route processing module; the non-synchronization data program modules include a station signaling equipment status information module.

Further, the communication connection channels are established by using TCP/IP network.

The above description is only a preferred embodiment of the present disclosure, and is not to be construed as limiting the scope of the disclosure.

## Claims

1. A data synchronization method for a host machine and a standby machine in a railway centralized traffic control system, comprising the steps of: dividing program modules in the host machine and the standby machine into synchronization data program modules and non-synchronization data program modules, wherein the synchronization data program modules include a train number tracking module, an information caching module, and a route processing module and the non-synchronization data program modules include a station signaling equipment status information module; establishing communication connection channels such that for each of the synchronization data program modules that requires data synchronization a corresponding communication connection channel is established; by the synchronization data program modules of the host machine, performing logical operation with a data read, and synchronizing operation result to the corresponding synchronization data program modules of the standby machine through the communication connection channels; for the non-synchronization data program modules that do not require data synchronization, performing, by the non-synchronization data program modules of the host machine and the standby machine, operation with the data they have read respectively.

2. The method according to claim 1, **characterized in that** the dividing program modules of the host machine and the standby machine is based on whether the program modules of the host machine and the program modules of the standby machine may read and operate the same data, wherein if the program modules of the host machine and the program modules of the standby machine can read and operate the same data, no synchronization is required, otherwise the synchronization is required.

3. The method according to any one of claims 1 to 2, **characterized in that** the communication connection channels are established by using TCP/IP network.

4. The method according to claim 1, **characterized in that** the train number tracking module is used to receive train number operation information, adjacent station train number information, train number verification information and station signaling equipment status information; the information caching module is used to receive train number information and station signaling equipment status information; the station signaling equipment status information module is used to receive interlocking status information, Train Control status information, and sampling status information; the route processing module is used to receive route operation information, route planning information, train number information, and station signaling equipment status information.

5. A data synchronization system for a railway centralized traffic control system, the data synchronization system comprising a host machine, a standby machine and communication connection channels; wherein the host machine includes a plurality of synchronization data program modules and a plurality of non-synchronization data program modules;
the standby machine includes a plurality of synchronization data program modules corresponding to the program modules of the host machine and a plurality of non-synchronization data program modules, wherein the synchronization data program modules include a train number tracking module, an information caching module, and a route processing module and the non-synchronization data program modules include a station signaling equipment status information module;
wherein each of the synchronization data program modules of the host machine is connected with the corresponding synchronization data program module of the standby machine through a respective one of the communication connection channels; the synchronization data program modules of the host machine are configured to perform logical operation with a data read and synchronize the operation result to the corresponding synchronization data program modules of the standby machine through the respective one of the communication connection channels; the non-synchronization data program modules of the host machine and the standby machine are configured to separately perform operation with the data they have read respectively.

## Patentansprüche

1. Datensynchronisierungsverfahren für einen Host-Rechner und ein Standby-Gerät in einem zentralisierten Eisenbahnverkehrssteuersystem, mit den Schritten:
Unterteilen von Programmmodulen in dem Host-Rechner und dem Standby-Gerät in Synchronisierungs-Datenprogrammmodule und Nicht-Synchronisierungs-Datenprogrammmodule, wobei die Synchronisierungs-Datenprogrammmodule ein Zugnummerverfolgungs-Modul, ein Informations-Caching-Modul und ein Streckenverarbeitungsmodul umfassen, und wobei die Nicht-Synchronisierungs-Datenprogrammmodule ein Informationsmodul bezüglich eines Stationssignaltechnikstatus aufweisen; Einrichten von Kommunikationsverbindungskanälen derart, dass für jedes der Synchronisierungs-Datenprogrammmodule, das eine Datensynchronisierung erfordert, ein entsprechender Kommunikationsverbindungskanal eingerichtet wird; Durchführen einer logischen Verknüpfung mit einer Datenauslesung durch die Synchronisierungs-Datenprogrammmodule des Host-Rechners und Synchronisierung des Verknüpfungsergebnisses mit den entsprechenden Synchronisierungs-Datenprogrammmodulen des Standby-Gerätes durch die Kommunikationsverbindungskanäle; und für die Nicht-Synchronisierungs-Datenprogrammmodule, die keine Datensynchronisierung erfordern, Durchführen einer Verknüpfung mit den Daten, die sie jeweils ausgelesen haben, durch die Nicht-Synchronisierungs-Datenprogrammmodule des Host-Rechners und des Standby-Gerätes.

2. Verfahren gemäß Anspruch 1, **dadurch gekennzeichnet, dass** die Unterteilung der Programmmodule des Host-Rechners und des Standby-Gerätes darauf basiert, ob die Programmodule des Host-Rechners und die Programmmodule des Standby-Gerätes dieselben Daten lesen und verarbeiten können, wobei wenn die Programmmodule des Host-Rechners und die Programmmodule des Standby-Gerätes dieselben Daten lesen und verarbeiten können, keine Synchronisierung erforderlich ist, andernfalls aber die Synchronisierung benötigt wird.

3. Verfahren gemäß irgendeinem der Ansprüche 1 bis 2, **dadurch gekennzeichnet, dass** die Kommunikationsverbindungskanäle unter Verwendung eines TCP/IP-Netzwerks eingerichtet werden.

4. Verfahren gemäß Anspruch 1, **dadurch gekennzeichnet, dass** das Zugnummerverfolgungs-Modul verwendet wird, um Zugnummer-Betriebsinformationen, Zugnummerinformationen zur benachbarten Station, Zugnummer-Überprüfungsinformationen und Informationen bezüglich eines Stationssignaltechnikstatus zu erhalten; das Informations-Caching-Modul dazu verwendet wird , Zugnummerinformationen und Informationen bezüglich eines Stationssignaltechnikstatus zu erhalten; das Informationsmodul bezüglich eines Stationssignaltechnikstatus dazu verwendet wird, um Stellwerk-Statusinformationen, Zugsteuer-Statusinformationen und Stichproben-Statusinformationen zu erhalten; das Streckenverarbeitungsmodul dazu verwendet wird, um Streckenbetriebsinformationen, Streckenplanungsinformationen, Zugnummerinformationen und Informationen bezüglich eines Stationssignaltechnikstatus zu erhalten.

5. Datensynchronisierungssystem für ein zentralisiertes EisenbahnverkehrsSteuersystem, wobei das Datensynchronisierungssystem einen Host-Rechner, ein Standby-Gerät und Kommunikationsverbindungskanäle aufweist; wobei der Host-Rechner eine Vielzahl von Synchronisierungs-Datenprogrammmodulen und eine Vielzahl von Nicht-Synchronisierungs-Datenprogrammmodulen aufweist;
das Standby-Gerät eine Vielzahl von Synchronisierungs-Datenprogrammmodulen entsprechend den Programmmodulen des Host-Rechners und eine Vielzahl von Nicht-Synchronisierungs-Datenprogrammmodulen aufweist, wobei die Synchronisierungs-Datenprogrammmodule ein Zugnummerverfolgungs-Modul, ein Informations-Caching-Modul und ein Streckenverarbeitungsmodul umfassen, und wobei die Nicht-Synchronisierungs-Datenprogrammmodule ein Informationsmodul bezüglich eines Stationssignaltechnikstatus aufweisen;
wobei
jedes der Synchronisierungs-Datenprogrammmodule des Host-Rechners mit dem entsprechenden Synchronisierungs-Datenprogrammmodul des Standby-Gerätes durch einen jeweiligen der Kommunikationsverbindungskanäle verbunden ist; die Synchronisierungs-Datenprogrammmodule des Host-Rechners dazu ausgebildet sind, eine logische Verknüpfung mit einer Datenauslesung durchzuführen und das Verknüpfungsergebnis mit den entsprechenden Synchronisierungs-Datenprogrammmodulen des Standby-Gerätes durch den jeweiligen der Kommunikationsverbindungskanäle zu synchronisieren; die Nicht-Synchronisierungs-Datenprogrammmodule des Host-Rechners und des Standby-Gerätes dazu ausgebildet sind, getrennt eine Verarbeitung der Daten durchzuführen, die sie jeweils ausgelesen haben.

## Revendications

1. Procédé de synchronisation de données pour un ordinateur hôte et un appareil en mode veille dans un système de commande de trafic ferroviaire centralisé, comprenant les étapes de :
diviser des modules de programme dans l'ordinateur hôte et l'appareil en mode veille en des modules de programme de synchronisation de données et des modules de programme de non-synchronisation de données, dans lequel les modules de programme de synchronisation de données comprennent un module de suivi de numéro de train, un module de cache d'informations et un module de traitement d'itinéraire et les modules de programme de non-synchronisation de données comprennent un module d'informations de statut d'un équipement de signalisation de station ; établir des canaux de liaison de communication de sorte que pour chacun des modules de programme de synchronisation de données, qui a besoin d'une synchronisation de données, un canal de liaison de communication est établi ; effectuer une opération logique avec une lecture de données par les modules de programme de synchronisation de données de l'ordinateur hôte, et synchroniser le résultat d'opération avec les modules de programme de synchronisation de données correspondants de l'appareil en mode veille à travers les canaux de liaison de communication ; pour les modules de programme de non-synchronisation de données, qui n'ont pas besoin de synchronisation de données, effectuer, par les modules de programme de non-synchronisation de données de l'ordinateur hôte et de l'appareil en mode veille, une opération avec les données qu'ils ont chacun lues.

2. Procédé selon la revendication 1, **caractérisé en ce que** la division des modules de programme de l'ordinateur hôte et de l'appareil en mode veille repose sur le fait si les modules de programme de l'ordinateur hôte et les modules de programme de l'appareil en mode veille peuvent lire et exploiter les mêmes données, dans lequel si les modules de programme de l'ordinateur hôte et les modules de programme de l'appareil en mode veille peuvent lire et exploiter les mêmes données, il ne faut pas de synchronisation, et sinon il faut une synchronisation.

3. Procédé selon l'une quelconque des revendications 1 à 2, **caractérisé en ce que** les canaux de liaison de communication sont établis en utilisant un réseau TCP/IP.

4. Procédé selon la revendication 1, **caractérisé en ce que** le module de suivi de numéro de train est utilisé pour recevoir des informations d'opération de numéro de train, des informations de numéro de train par rapport à la station adjacente, des informations de vérification de numéro de train et des informations de statut d'un équipement de signalisation de station ; le module de cache d'informations est utilisé pour recevoir des informations de numéro de train et des informations de statut d'un équipement de signalisation de station ; le module d'informations de statut d'un équipement de signalisation de station est utilisé pour recevoir des informations de statut d'enclenchement, des informations de statut de commande de train et des informations de statut d'échantillonnage ; le module de traitement d'itinéraire est utilisé pour recevoir des informations d'exploitation d'itinéraire, des informations de planification d'itinéraire, des informations de numéro de train et des informations de statut d'un équipement de signalisation de station .

5. Système de synchronisation de données pour un système de commande de trafic ferroviaire centralisé, le système de synchronisation de données comprenant un ordinateur hôte, un appareil en mode veille et des canaux de liaison de communication ;
dans lequel l'ordinateur hôte comprend une pluralité de modules de programme de synchronisation de données et une pluralité de modules de programme de non-synchronisation de données ;
l'appareil en mode veille comprend une pluralité de modules de programme de synchronisation de données correspondant aux modules ce programme de l'ordinateur hôte et une pluralité de modules de programme de non-synchronisation de données, dans lequel les modules de programme de synchronisation de données comprennent un module de suivi de numéro de train, un module de cache d'informations et un module de traitement d'itinéraire et les modules de programme de non-synchronisation de données comprennent un module d'informations de statut d'un équipement de signalisation de station ;
dans lequel
chacun des modules de programme de synchronisation de données de l'ordinateur hôte est relié au module de programme de synchronisation de données correspondant de l'appareil en mode veille à travers un respectif des canaux de liaison de communication ; les modules de programme de synchronisation de données de l'ordinateur hôte sont configurés pour effectuer une opération logique avec une lecture de données et pour synchroniser le résultat d'opération avec les modules de programme de synchronisation de données correspondants de l'appareil en mode veille à travers le respectif des canaux de liaison de communication ; les modules de programme de non-synchronisation de données de l'ordinateur hôte et de l'appareil en mode veille sont configurés pour effectuer séparément une exploitation des données qu'ils ont chacun lues.
